**Europäisches Patentamt**

(19) **European Patent Office**

**Office européen des brevets**

(11) Numéro de publication: **0 047 211**
**B1**

(12) ## FASCICULE DE BREVET EUROPEEN

(45) Date de publication du fascicule du brevet:
**06.02.85**

(51) Int. Cl.⁴: **B 64 G 1/00**

(21) Numéro de dépôt: **81401354.6**

(22) Date de dépôt: **27.08.81**

(54) **Procédé de changement d'orbite d'un satellite, notamment d'injection en orbite géostationnaire et satellite mettant en oeuvre ledit procédé.**

(30) Priorité: **02.09.80 FR 8018918**

(43) Date de publication de la demande:
**10.03.82 Bulletin 82/10**

(45) Mention de la délivrance du brevet:
**06.02.85 Bulletin 85/6**

(84) Etats contractants désignés:
**CH DE GB IT LI NL SE**

(56) Documents cités:
**DE - A - 2 850 920**

**ELDO/CECLES TECH. REV., vol. 3, 1968 Paris (FR) R.C. GODWIN et al.: "Electric Propulsion for Eldo Vehicles", pages 127-148**
**ASTRONAUTICA ACTA, vol. 13, 1967, Pergamon Press Ltd (GB) J.P. MAREC: "Transferts économiques plans de type Hohmann entre orbites quasi-circulaires coaxiales proches", pages 269-279**
**ASTRONAUTICA ACTA, vol. 12, 1966 (US) J.E. McINTYRE et al.: "Linearized Treatment of the Optimal Transfer of a Thrust-Limited Vehicle Between Coplanar Circular Orbits", pages 224-234**

(73) Titulaire: **SOCIETE NATIONALE INDUSTRIELLE AEROSPATIALE, 37 boulevard de Montmorency, F-75016 Paris Cedex 16 (FR)**

(72) Inventeur: **Mortelette, André, 72 Boulevard Carnot, F-06110 Le Cannet (FR)**

(74) Mandataire: **Rinuy, Guy et al, 14, Avenue de la Grande Armée, F-75017 Paris (FR)**

ACTORUM AG

## Description

L'invention a pour objet tant un procédé de changement d'orbite d'un satellite et notamment le passage d'une orbite fortement elliptique à une orbite circulaire éventuellement géosynchrone et d'inclinaison différente, qu'un dispositif de mise en œuvre dudit procédé.

Pour mettre une charge utile en orbite, notamment géosynchrone, une fusée multi-étage place celle-ci sur une orbite elliptique dite de transfert dont le périgée est au voisinage de l'altitude de culmination de la fusée soit quelques centaines de kilomètres dont l'apogée se trouve approximativement à l'altitude ultérieure de révolution et dont l'inclinaison est généralement différente de celle de l'orbite finale, car elle dépend de la latitude du point de lancement.

Le changement d'orbite se fait par accroissement de la vitesse du satellite au voisinage immédiat de l'apogée de l'orbite de transfert, accroissement obtenu grâce à la poussée d'un moteur dit d'apogée qui en un temps très bref produit une quantité de mouvement importante. Cette manœuvre est unique; elle est toutefois complétée par des petites corrections fournies par les tuyères auxiliaires. Il est également possible, à partir de l'altitude de culmination de la fusée, à l'aide d'une poussée permanente très faible, de mettre le satellite sur une orbite en forme de spirale ce qui correspond à des accroissements lents de la vitesse et de l'altitude jusqu'à obtention des conditions finales.

La première méthode connue sous le nom de transfert de Hohmann est d'autant plus efficace que l'accroissement de vitesse est bref, ce qui a conduit à utiliser des moteurs à propergols solides dont la durée de combustion est de quelques secondes; elle a pour inconvénient de créer une accélération importante qui peut être dimensionnante pour les structures mécaniques, et de provoquer des échauffements importants qui nécessitent des protections particulières.

Ces inconvénients sont atténués en utilisant des moteurs de poussée moindre, ce qui est le cas des moteurs à propergols liquides, le ou les carburants pouvant être prélevés dans des réservoirs alimentant également les moteurs de contrôle angulaire dit contrôle d'attitude ainsi que les moteurs de maintien à poste, moteurs dits de contrôle d'orbite.

Ce procédé connu nécessite un propulseur spécifique à la mise en orbite et conduit à des accélérations qui peuvent être encore incompatibles avec la tenue mécanique de certains éléments structuraux, en particulier des appendices tels qu'antennes de grandes dimensions, panneaux solaires, mâts.

L'autre méthode précitée utilise des moteurs à effet magnéto-hydrodynamique appelés propulseurs électriques et générant des accélérations très faibles; la durée de parcours de l'orbite spiralée est alors très importante, plusieurs mois, ce qui entraîne une perte de temps et une durée de passage dans les zones de rayonnement intense entourant la terre connues sous le nom de ceintures de Van Allen qui est grande et provoque des dégradations du véhicule, en particulier, aux photopiles des générateurs d'électricité.

Ce procédé a été longuement étudié par l'ancienne organisation européenne de construction des lanceurs, l'ELDO, dans les années 1960–1970. Il est bien décrit dans le document de Monsieur K. R. Schreitmüller du Deutsche Forschungs- und Versuchsanstalt für Luft- und Raumfahrt, intitulé «Bahnübergänge auf die geostationäre Bahn mit Hilfe solar-elektrischer Systeme». Il existe également des études américaines, parmi les plus connues, on peut citer:
– Optimal guidance and mechanics of low thrust spiral trajectories by R.A. Jacobson – thèse de doctorat en philosophie soutenue en 1972 à l'université du Michigan.
– Optimal low thrust geocentric transfer by Edelbaum and al. A.I.A.A. Paper 73.104 et 74.801.
– Low thrust trajectory analysis for the geosynchronous mission by Thomas Jasper – A.I.A.A. 73.1072.
– Solar electric propulsion for the satellite transport into a geostationary orbit by Scharf and al. A.I.A.A. 72.505.

On connaît aussi un troisième procédé de changement d'orbite, d'après notamment le brevet DE-A 28 50 920, selon lequel à partir d'une orbite circulaire basse, on fait décrire au véhicule une succession d'orbites élliptiques intermédiaires tangentes à cette orbite basse et dont les apogées s'élèvent progressivement vers l'orbite haute; pour cela le véhicule est soumis à de faibles accélérations au périgée de chaque orbite intermédiaire; lorsque l'altitude de l'orbite haute est atteinte le véhicule est soumis, à l'apogée de la dernière orbite intermédiaire, à une unique accélération qui le place dans l'orbite désirée. Le véhicule est déployé en configuration opérationnelle au cours du parcours de l'orbite basse et les accélérations intermédiaires sont suffisamment faibles pour être compatibles avec la tenue mécanique du véhicule dans cette configuration. La propulsion du véhicule nécessite toutefois des moyens spécifiques nécessaires à l'obtention de l'importante accélération finale.

Tous ces procédés ont pour inconvénient de nécessiter des moyens spécifiques à cette phase de vol qui en fait constitue une période très courte de la vie du satellite, ce qui entraîne une augmentation de masse, soulève des problèmes d'implantation et de tenue mécanique, engendre des échauffements locaux et enfin diminue la fiabilité du véhicule.

La présente invention a pour objet un procédé de changement d'orbite et un dispositif de mise en œuvre dudit procédé utilisant non pas des propulseurs spécifiques, mais ceux indispensables au contrôle d'orbite et d'attitude durant la vie opérationnelle du satellite.

En particulier, tout satellite géostationnaire doit avoir des propulseurs capables de le maintenir à longitude fixe, ce qui nécessite de lui fournir des accélérations suivant la tangente à l'orbite dans les deux sens possibles, c'est-à-dire suivant les directions Est-Ouest et Ouest-Est.

Il pourra être fait également usage des propulseurs de correction d'inclinaison dont la poussée est dirigée suivant la ligne Nord-Sud ainsi que les propulseurs de contrôle de l'attitude qui fournissent des couples autour des trois axes du véhicule.

Ces propulseurs ayant des poussées faibles, il n'est pas possible de procéder à un transfert de Hohmann unique, mais par contre, il est possible de les actionner lorsque le satellite est entièrement déployé (antennes, panneaux solaires, mâts, etc.) sans l'endommager, ce dont profite l'invention.

Par rapport au document DE-A 2 850 920 qui décrit déja un procédé de changement d'orbite d'un véhicule spatial selon lequel on fait décrire au véhicule une pluralité d'orbites intermédiaires successives au moyen d'incréments de vitesse suivant des directions approximativement tangentes aux orbites, résultant d'accélérations compatibles avec la tenue mécanique du véhicule en configuration opérationnelle, ces accélérations étant modulées de façon à garantir à la résultante la direction recherchée, le procédé selon l'invention, permettant notamment le passage d'une orbite fortement elliptique à une orbite circulaire éventuellement géosynchrone et d'inclinaison différente, est caractérisé en ce qu'il consiste:

– à viser avec un lanceur une orbite de transfert dont l'apogée est voisin de la valeur souhaitée pour l'orbite finale,

– a faire passer le véhicule de cette orbite de transfert à l'orbite finale par l'entremise d'orbites intermédiaires successives dont les apogées sont voisins, mais dont les périgées se rapprochent de la valeur finale souhaitée, au moyen d'une succession d'incréments de vitesse, délivrés aux voisinages immédiats des apogées successifs, résultant d'accélérations obtenues au moyen de moteurs destinés au contrôle ultérieur d'orbite et d'attitude pendant la vie opérationnelle du véhicule, et

– à moduler ces accélérations en fonction des informations fournies par des détecteurs de vitesse ou de position angulaire utilisables également pour les autres phases de vol du véhicule.

Par rapport au document DE-A 2 850 920 qui décrit un véhicule spatial adapté à la mise en œuvre d'un procédé de changement d'orbite, l'invention est en outre caractérisée par les mesures contenues dans la partie caractérisante de la revendication 5.

Le procédé conforme à l'invention consiste a viser avec le lanceur une orbite de transfert dont l'apogée est voisin de la valeur finale souhaitée et à fournir au voisinage des apogées successifs des incréments de vitesse, de direction et de module parfaitement définis de façon à remonter l'altitude des périgés. Après quelques révolutions, l'orbite définitive est atteinte. Certes, la somme des incréments de vitesse est légèrement supérieure à un incrément unique tel que nécessité par le transfert de Hohmann unique. Mais il est à noter que si les différents incréments sont suffisamment brefs pour que la direction de la vitesse reste voisine de la tangente, alors il y a équivalence au point de vue énergétique entre les deux procédés, et le bilan de masse global est favorable au procédé, objet de la présente invention car il y a économie du matériel nécessaire à la mise en œuvre des poussées, en particulier il y a suppression du moteur d'apogée et reduction des structures résultant de la réduction des accélérations. De même, il n'est plus nécessaire d'utiliser de capteur d'attitude et des moyens de contrôle d'attitude spécifiques à cette phase de vol.

D'autres caractéristiques, avantages et particularités de la présente invention ressortiront de la description d'un mode de réalisation possible de l'invention, pris à titre d'exemple préférentiel non limitatif, et illustré schématiquement sur les dessins annexés, sur lesquels:

la figure 1 montre une mise en orbite géostationnaire de conception classique actuelle, avec incrémentation de la vitesse en seul point;

la figure 2 montre une montée à l'aide d'une trajectoire spiroïdale à l'aide d'un accroissement de vitesse très faible mais continu;

la figure 3 montre une mise en orbite par application du procédé conforme à la présente invention; et

la figure 4 représenté très schématiquement une façon d'implanter les tuyères nécessaires au contrôle d'attitude et d'orbite ainsi que les équipements de détection d'attitude qui sont nécessaires à la mise en œuvre du procédé conforme à l'invention.

On va tout d'abord très brièvement décrire les deux méthodes classiques actuellement utilisées pour placer un satellite sur une orbite circulaire.

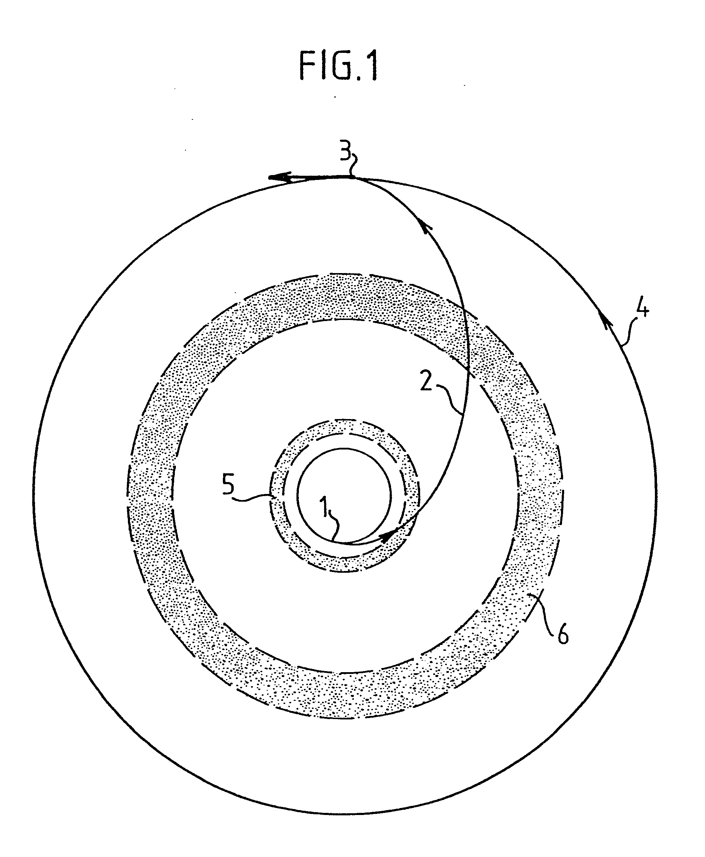

Sur la figure 1, qui schématise les différentes manœuvres de Hohmann, on distingue la phase de lancement 1 durant laquelle la fusée place le satellite sur une orbite circulaire basse, puis la phase de transfert 2 durant laquelle le satellite est injecté, grâce à un accroissement de vitesse au périgée, sur une orbite elliptique dont l'apogée correspond à l'altitude finale recherchée et où un second accroissement de vitesse 3 injecte le satellite sur l'orbite circulaire finale 4. Les parties référencées 5 et 6 schématisent les zones de radiations intenses connues sous le nom de ceintures de Van Allen.

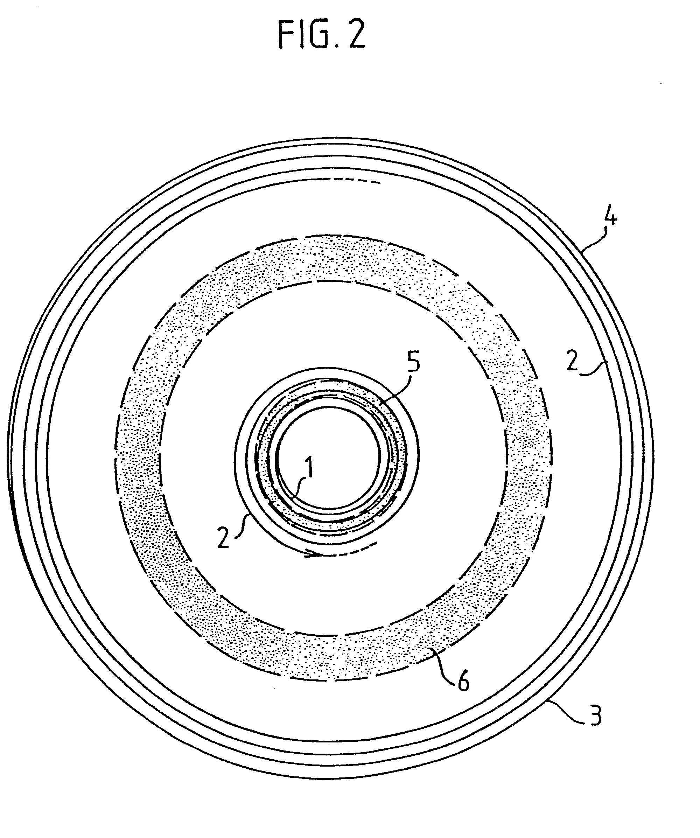

Sur la figure 2, qui montre une montée à l'aide d'une trajectoire spiroïdale grâce à un accroissement de vitesse très faible mais continu, on distingue la phase de lancement 1, la phase de transfert 2 qui est constituée par la trajectoire spiroïdale proprement dite. En 3 a lieu la dernière manœuvre permettant d'injecter le satellite sur l'orbite circulaire finale 4. En 5 et 6 sont schématisées les ceintures de Van Allen.

On n'insistera pas ici sur les inconvénients des deux méthodes de changement d'orbite actuellement connues, qui ont été exposés précédemment.

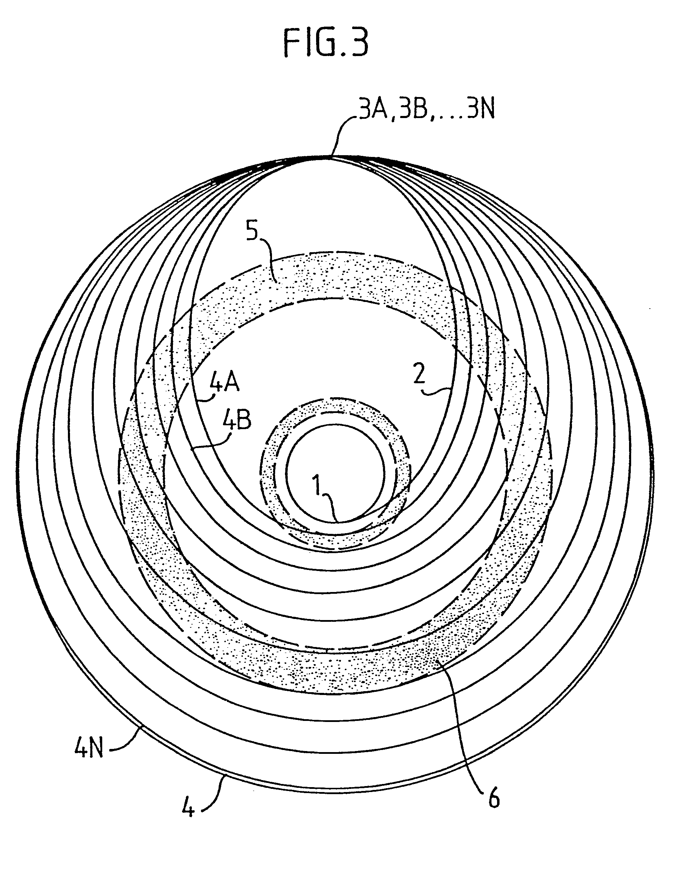

On va maintenant décrire une mise en orbite par application du procédé conforme à la présente invention en se référant à la figure 3.

Après la phase de lancement 1, le satellite est mis sur une première demi-orbite elliptique 2 vers l'apogée de laquelle est délivré un incrément de vitesse 3A. Le satellite décrit alors une seconde orbite elliptique 4A ayant un périgée nettement plus élevé et un apogée très légèrement plus élevé. Un nouvel incrément de vitesse 3B est délivré au nouvel apogée, ce qui place le véhicule sur une nouvelle orbite elliptique 4B ayant un périgée nettement plus élevé et un apogée légèrement plus élevé que celui de la précédente orbite. On procède ainsi de suite jusqu'à l'orbite elliptique 4N dont l'apogée correspond à l'altitude finale recherchée permettant de placer le véhicule sur son orbite circulaire définitive 4.

Comme sur les figures précédentes, les ceintures de Van Allen sont schématisées en 5 et 6.

Chacune des manœuvres indiquées peut être effectuée hors du plan orbital de façon à modifier l'inclinaison progressivement jusqu'à atteindre l'inclinaison finale.

Il est à noter que les manœuvres de changement d'orbites successives sont conçues pour que la dernière manœuvre positionne le véhicule à son point final.

Lorsque les changements d'orbites considérés sont un transfert entre une orbite basse et une orbite géosynchrone, les manœuvres sont conçues pour amener en même temps le véhicule à l'anomalie définitive, la dernière manœuvre consiste à annuler la vitesse en ce point.

Il est important de rappeler, par ailleurs, que le procédé selon l'invention n'utilise pas de propulseurs spécifiques, comme dans les méthodes antérieures, mais ceux indispensables au contrôle d'orbite et d'attitude durant la vie opérationnelle du satellite.

Comme on l'a vu précédemment, les propulseurs en question ayant des poussées faibles, il n'est pas possible de procéder à un transfert de Hohmann unique, mais il est possible de les actionner lorsque le satellite est entièrement déployé, ce qui présente un avantage du procédé conforme à l'invention.

Avant de procéder à la description détaillée de la manière d'implanter les tuyères nécessaires au contrôle d'attitude et d'orbite ainsi que les équipements de détection d'attitude qui sont nécessaires à la mise en œuvre du procédé selon l'invention, on va procéder à une description énergétique de l'invention.

En première approximation, le mouvement d'un satellite terrestre est régi par les lois du mouvement sous l'action de l'attraction newtonienne de la terre seule, dont une des caractéristiques principales est que la longueur du grand axe dépend de l'énergie totale fournie au véhicule; c'est pourquoi la façon la plus efficace de changer ce demi grand axe et ainsi d'élever l'altitude du satellite est d'augmenter la valeur de la vitesse ce qui conduit aux manœuvres de Hohmann telles que schématisées sur la figure 1 où la fusée place le satellite sur une orbite circulaire basse puis l'injecte grâce à un accroissement de vitesse au périgée sur une orbite elliptique dont l'apogée correspond à l'altitude finale recherchée, et où un second accroissement de vitesse l'injecte sur l'orbite circulaire finale.

A titre d'information, pour un lancement à partir du centre spatial américain de Cap Kennedy et pour atteindre une orbite géostationnaire à inclinaison nulle et en partant d'un périgée à 180 km d'altitude, l'accroissement de vitesse doit être de 1750 m/s environ à l'apogée.

Au départ du centre spatial guyanais, avec une fusée Ariane plaçant le satellite à un périgée de 200 km, il faut à l'apogée un incrément d'environ 1530 m/s pour obtenir la même orbite finale.

On démontre facilement par des considérations énergétiques simples que ce transfert peut être décomposé en différents transferts de Hohmann intermédiaire sans changer la fourniture totale d'énergie; c'est-à-dire l'accroissement de vitesse.

Dans le cas plus réaliste où il est tenu compte des effets gravitationnels de la lune et du soleil, des anomalies du potentiel terrestre, des effets aérodynamiques, magnétiques et électriques d'origine terestre, il est possible de vérifier par intégration pas à pas des équations des forces que les conclusions précédentes restent valables.

En outre, le choix judicieux de la succession des incrémentations peut tenir comtpe d'autres critères. Par exemple, on peut minimiser le temps d'évolution dans des tranches d'altitude données, choisies comme pouvant symboliser les zones de radiations intenses connues sous le nom de ceintures de Van Allen; on peut optimiser également et en même temps la longitude de la position finale du satellite de façon à éliminer la phase dite de dérive dans les mises en orbite classiques. Ceci permet une économie notable de temps et de carburant.

A titre d'exemple voici les manœuvres qui, au départ du centre de lancement de Guyane, permettent d'atteindre une longitude finale voisine de 20° Ouest en moins de 10 jours, en séjournant moins de 10 heures dans les ceintures de radiation de Van Allen, celles-ci étant schématisées par la tranche d'altitude de 1872 km à 3752 km qui représente la zone à haute densité de protons et la tranche d'altitude de 17 262 km à 23 262 km qui représente la zone à haute densité d'électrons.

– Première apogée: incrément de vitesse 262 m/s en 2 h 59 min
– Deuxième apogée: incrément de vitesse 255 m/s en 2 h 37 min
– Troisième apogée: incrément de vitesse 252 m/s en 2 h 22 min
– Quatrième apogée: incrément de vitesse 251 m/s en 2 h 09 min
– Cinquième apogée: incrément de vitesse 251 m/s en 1 h 59 min
– Sixième apogée: pas de manœuvre

– Septième apogée: incrément de vitesse 96 m/s en 43 min
– Huitième apogée: pas de manœuvre
– Neuvième apogée: incrément de vitesse 77 m/s en 43 min
– Dixième apogée: incrément de vitesse 76 m/s en 52 min
– Onzième apogée: incrément de vitesse 4 m/s en 1 min
– Douzième apogée: incrément de vitesse 0,03 m/s en 55 secondes.
Durée totale de l'opération: 9 jours et 12 heures
Temps passé dans les zones de radiation: 9 heures 30 minutes
Longitude finale: 20° Ouest
Total des incréments de vitesse: 1544,03 m/s.
Les orbites correspondantes sont tracées sur la figure 3.

Pour changer le plan de l'orbite par rapport à celui de l'orbite initiale, il faut donner aux vitesses énumérées ci-dessus la même orientation hors du plan de l'ellipse qui serait nécessaire dans un transfert de Hohmann.

En ce qui concerne les moyens pour la mise en œuvre du procédé conforme à l'invention, il est important de noter que dès la mise en orbite de transfert 2, le satellite pourra être mis en configuration quasi définitive, c'est-à-dire que les panneaux solaires, les antennes, les mâts, ... seront développés et l'attitude par rapport au soleil sera acquise. Dès lors les alimentations électriques et les conditionnements thermiques seront en configuration opérationnelle.

Ensuite, l'acquisition de la terre par les senseurs terrestres sera réalisée par des moyens classiques, c'est-à-dire pré-acquisition à partir de données précalculées et en pilotant le véhicule en vitesse suivant les indications des gyromètres, puis acquisition fine avec les senseurs terrestres.

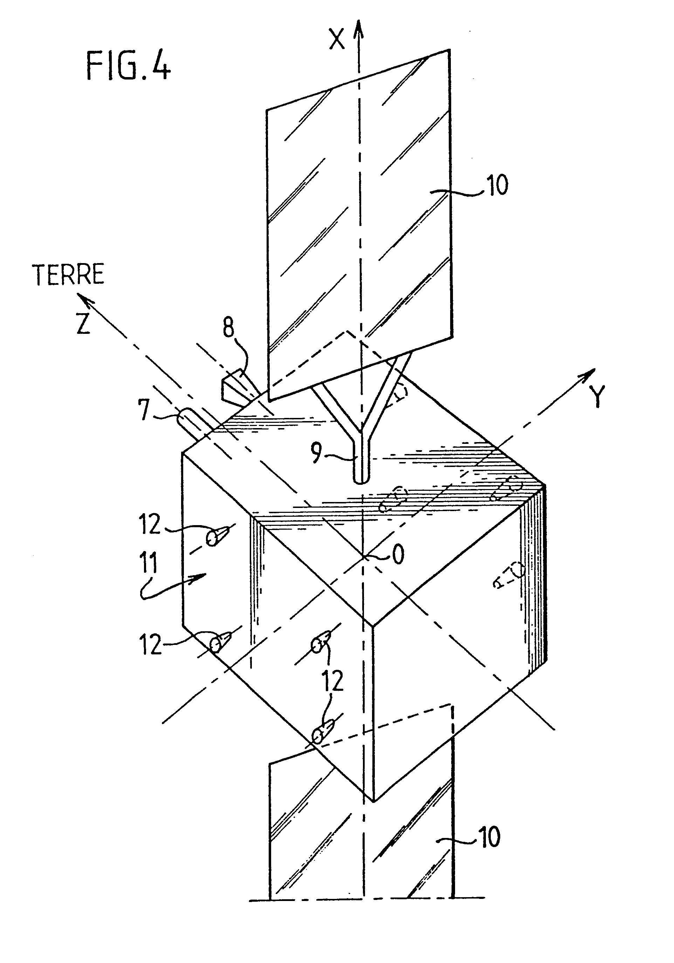

Ainsi, dès le début de l'orbite de transfert 2, le satellite aura l'attitude définitive suivante représentée sur la figure 4:
– l'axe OZ suivant la direction satellite/terre est le futur axe de roulis; il est pointé vers le centre de la terre par des détecteurs terrestres infrarouges 7, ou vers une balise par un détecteur radiofréquence 8, ou les deux;
– l'axe OY qui correspond à la normale aux faces non équipées de panneaux solaires est dans le plan de l'orbite; le troisième axe OX se déduit alors immédiatement. Dans le cas d'un lancement depuis le centre spatial guyanais, l'inclinaison du plan de l'orbite varie au cours de manœuvres de 10° à 0° donc la direction de l'axe de rotation 9 de panneaux solaires 10 par rapport à la direction idéale Nord-Sud évolue de 10° à 0° de la même façon.

La poussée suivant la direction normale à la face Est 11 du satellite sera obtenue par activation de quatre tuyères 12 de contrôle d'orbite et d'attitude situées sur cette face. Pour éviter de fournir des couples parasites lors de cette poussée, ces quatre poussées seront contrôlées et modulées en fonction des informations d'attitude ou de vitesse angulaire pendant la combustion. Par ce moyen, il est possible de contrôler la direction de la poussée sans avoir recours à des efforts latéraux complémentaires donc sans dépense énergétique supplémentaire.

Il ressort donc bien que les moteurs utilisés pour le transfert d'orbite sont également utilisés, tout au moins pour certains d'entre eux, pour contrôler l'attitude et/ou l'orbite durant la vie opérationnelle du véhicule.

**Revendications**

1. Procédé de changement d'orbite d'un véhicule spatial, permettant notamment le passage d'une orbite fortement elliptique (2) à une orbite circulaire (4) éventuellement géosynchrone et d'inclinaison différente, selon lequel on fait décrire au véhicule une pluralité d'orbites intermédiaires (4A-4N) successives au moyen d'incréments de vitesse suivant des directions approximativement tangentes aux orbites, résultant d'accélérations compatibles avec la tenue mécanique du véhicule en configuration opérationnelle, ces accélérations étant modulées de façon à garantir à la résultante la direction recherchée, ce procédé étant caractérisé en ce qu'il consiste:
– à viser avec un lanceur une orbite de transfert (2) dont l'apogée (3A) est voisin de la valeur souhaitée pour l'orbite finale (4),
– à faire passer le véhicule de cette orbite de transfert (2) à l'orbite finale (4) par l'entremise d'orbites intermédiaires successives (4A, 4B, ... 4N) dont les apogées sont voisins, mais dont les périgées se rapprochent de la valeur finale souhaitée, au moyen d'une succession d'incréments de vitesse, délivrés aux voisinages immédiats des apogées successifs, résultant d'accélérations obtenues au moyen de moteurs (12) destinés au contrôle ultérieur d'orbite et d'attitude pendant la vie opérationnelle du véhicule, et
– à moduler ces accélérations en fonction des informations fournies par des détecteurs de vitesse ou de position angulaire utilisables également pour les autres phases de vol de véhicule.

2. Procédé de changement d'orbite d'un véhicule spatial selon la revendication 1, caractérisé en ce que le véhicule est mis en configuration opérationnelle avant même les premières utilisations des moteurs de poussée (12).

3. Procédé de changement d'orbite d'un véhicule spatial selon la revendication 1, caractérisé en ce que les manœuvres de changement d'orbites successives sont conçues pour que la dernière manœuvre positionne le véhicule à son point final.

4. Procédé de changement d'orbite d'un véhicule spatial selon la revendication 3, caractérisé en ce que, dans le cas où les changements d'orbites visent le transfert entre une orbite basse et une orbite géosynchrone, les manœuvres de changement d'orbites successives sont conçues pour amener, en même temps, le véhicule à l'anomalie définitive, la dernière manœuvre consistant à annuler la vitesse en ce point.

5. Véhicule spatial adapté à la mise en œuvre du procédé de changement d'orbite selon l'une quelconque des revendications 1 à 4, caractérisé en ce qu'il ne comporte pas de propulseurs spécifiques mais que l'on utilise pour les manœuvres de transfert les faibles poussées des tuyères (12) de contrôle d'orbite et d'attitude situées sur la face Est du satellite, après mise en configuration quasi-définitive de ce dernier dès la mise en orbite de transfert, l'ensemble des poussées desdites tuyères étant modulé sous le contrôle d'un système de commande utilisant comme signaux d'entrée les informations de détecteurs de vitesse ou de position angulaire, ceux-ci étant utilisables églament pour les autres phases de vol du véhicule.

## Claims

1. A method of changing the orbit of a space vehicle allowing among others a transition from a highly elliptic orbit (2) to a circular orbit (4) possibly geosynchronous and of different inclination, according to which the vehicle is made to follow a plurality of successive intermediate orbits (4A-4N) by means of speed increments in directions approximatively tangent to the orbits, resulting from accelerations compatible with the mechanical behaviour of the vehicle in operational configuration, such accelerations being modulated so as to ensure the desired direction to the resultant, said method being characterized in that it consists of:
– aiming with a launcher at a transfer orbit (2) the apogee (3A) of which is close to the desired value for the final orbit (4),
– making the vehicle change from such transfer orbit (2) to the final orbit (4) through successive intermediate orbits (4A, 4B . . .4N) the apogees of which are adjoining but the perigees of which get closer to the desired final value, by means of a succession of speed increments delivered in the immediate neighbourhood of the successive apogees resulting from accelerations obtained by means of motors (12) intended for subsequent orbit and attitude control during the operational life of the vehicle, and
– modulating such accelerations depending on information provided by speed or angular position sensors, also usable in the other flight phases of the vehicle.

2. A method of changing the orbit of a space vehicle according to claim 1, characterized in that the vehicle is brought into operational configuration even before first utilizations of the thrust motors (12).

3. A method of changing the orbit of a space vehicle according to claim 1, characterized in that the successive orbit change manœuvres are devised so that the last manœuvre positions the vehicle to its final point.

4. A method of changing the orbit of a space vehicle according to claim 3, characterized in that, in case the orbit changes are intended for transferring the vehicle from a low orbit to a geosynchronous orbit, the successive orbit change manœuvres are devised so as to bring simultaneously the vehicle to the definitive anomaly, the last manœuvre consisting of nullifying the speed at that point.

5. A space vehicle adapted to cary out the method of changing orbit according to any one of claims 1 to 4, characterized in that it does not comprise any specific propellers, but that for the transfer manœuvres the low thrusts from orbit and attitude control nozzles (12) mounted on the East face of the satellite are used after bringing the satellite into an almost definitive configuration upon bringing it into transfer orbit, the whole of the thrusts from said nozzles being modulated under the command of a control system using as the input signals information from speed or angular position sensors, these being also usable in the other flight phases of the vehicle.

## Patentansprüche

1. Verfahren zum Verändern der Umlaufbahn eines Raumflugkörpers und insbesondere zur Überführung aus einer stark elliptischen Umlaufbahn (2) in eine eventuelle geosynchrone Kreisbahn (4) mit anderer Inklination, bei dem der Flugkörper in mehrere, aufeinanderfolgende Zwischenbahnen (4A bis 4N) durch Geschwindigkeitsinkremente in zu den Bahnen annähernd tangentialen Richtungen gebracht wird, die aus den mit dem mechanischen Verhalten des Flugkörpers in Operationskonfiguration kompatiblen Beschleunigungen resultieren, welche so moduliert werden, dass die gewünschte Richtung der Resultierenden gewährleistet wird, dadurch gekennzeichnet, dass
– mit einer Trägerrakete ein Transferorbit (2) angeflogen wird, dessen Apogäum (3A) in der Nähe des für den Endorbit (4) gewünschten Wert liegt, dass
– der Flugkörper aus dem Transferorbit (2) in den Endorbit (4) über aufeinanderfolgende Zwischenbahnen (4A, 4B,... 4N) gebracht wird, deren Apogäen nahe beieinanderliegen, deren Perigäen sich jedoch dem gewünschten Endwert nähern, und zwar mittels einer Folge von Geschwindigkeitsinkrementen vorgenommen wird, die in unmittelbarer Nähe der aufeinanderfolgenden Apogäen erteilt werden und aus Beschleunigungen mit Hilfe von Triebwerken (12) resultieren, die zur späteren Umlaufbahn- und Lagesteuerung während der Operationslebensdauer des Flugkörpers bestimmt sind, und dass
– diese Beschleunigungen in Abhängigkeit von Informationen moduliert werden, die von Geschwindigkeits- oder Winkelstellungsfühlern geliefert werden, welche auch in den anderen Flugphasen des Flugkörpers verwendbar sind.

2. Verfahren zum Ändern der Umlaufbahn eines Raumflugkörpers nach Anspruch 1, dadurch gekennzeichnet, dass der Flugkörper schon vor den ersten Einsätzen der Schubtriebwerke (12) in die operationelle Konfiguration gebracht wird.

3. Verfahren zum Ändern der Umlaufbahn eines Raumflugkörpers nach Anspruch 1, dadurch gekennzeichnet, dass die Manöver zur Änderung der aufeinanderfolgenden Umlaufbahnen so durchgeführt werden, dass der Flugkörper durch das letzte Manöver in seinem Endpunkt positioniert wird.

4. Verfahren zum Ändern der Umlaufbahn eines Raumflugkörpers nach Anspruch 3, dadurch gekennzeichnet, dass im Falle des Transfers zwischen einer niedrigen Umlaufbahn und einer geosynchronen Umlaufbahn die Manöver zur Änderung der aufeinanderfolgenden Umlaufbahnen so durchgeführt werden, dass der Flugkörper gleichzeitig in die endgültige Anomalie gebracht wird, wobei das letzte Manöver in der Geschwindigkeitsannullierung an diesem Punkt besteht.

5. Raumflugkörper zur Durchführung des Verfahrens zum Ändern der Umlaufbahn nach einem der Ansprüche 1 bis 4, dadurch gekennzeichnet, dass er keine spezifischen Triebwerke besitzt, sondern dass für die Transfermanöver die geringen Schübe der auf der Ostseite des Flugkörpers gelegenen Düsen (12) zur Umlaufbahn- und Lagesteuerung benutzt werden, nachdem der Flugkörper ab dem Eintritt in den Transferorbit in seine quasi-endgültige Konfiguration gebracht wurde, wobei die Schübe der Düsen durch ein Steuersystem gesteuert und moduliert werden, das als Eingangssignale die Informationen von Geschwindigkeits- oder Winkelstellungsfühlern benutzt, die auch für die anderen Flugphasen des Flugkörpers verwendbar sind.

# FIG.1

# FIG.2

# FIG.3

FIG.4

X

TERRE

Z

8

7

9

Y

12

11

12

0

12

10

10